# NEUE EUROPÄISCHE PATENTSCHRIFT

(11) **EP 2 823 924 B2**
(45) Veröffentlichungstag und Bekanntmachung des Hinweises auf die Entscheidung über den Einspruch: **01.01.2025**
(45) Hinweis auf die Patenterteilung: 05.08.2020
(21) Anmeldenummer: 14171795.9
(22) Anmeldetag: 10.06.2014
(51) Int. Cl.: B23F 23/12, B24B 53/075, B23F 21/02, B23F 21/00

(54) **Doppelabrichter**
Double dressing unit
Machine à dresser double

(30) Priorität: 02.07.2013 DE 102013011048
(43) Veröffentlichungstag der Anmeldung: 14.01.2015
(73) Patentinhaber: Liebherr-Verzahntechnik GmbH, 87437 Kempten (DE)
(72) Erfinder: Breith, Thomas, 87439 Kempten (DE); Zankl, Manfred, 87634 Obergünzburg (DE)
(74) Vertreter: Laufhütte, Dieter

(56) Entgegenhaltungen:
- EP-A2- 0 328 482
- EP-A2- 2 093 007
- CH-A- 458 885
- DE-A1- 102011 120 449
- DE-A1- 3 433 044
- US-A- 3 747 584
- US-A1- 2013 061 704

## Beschreibung

Die Erfindung betrifft eine Vorrichtung und ein Verfahren zum Abrichten von Wälz- oder Profilschleifwerkzeugen für die Verzahnungsbearbeitung von verzahnten Werkstücken mit mindestens zwei scheibenförmigen Abrichtwerkzeugen mit denen einer oder mehrere Werkzeugbereiche und/oder Profilbereiche des Werkzeuges mit einer definierten Abrichtgeometrie versehen werden sowie eine Verzahnmaschine mit einer solchen Vorrichtung und ein Steuerungsprogramm zur automatisierten Durchführung des genannten Verfahrens.

Verzahnungsschleifmaschinen werden bei der Herstellung von Zahnrädern zur Hartfeinbearbeitung von vorbearbeiteten Zahnrädern eingesetzt, um diesen ihre endgültige Geometrie zu verleihen. Üblicherweise werden bei der Herstellung von Zahnrädern dabei zunächst in einem Weichvorbearbeitungsschritt Zähne aus einem rotationssymmetrischen Werkstück geformt, z. B. durch Fräsen oder Stoßen. Das so vorbearbeitete Werkstück wird daraufhin einer Wärmebehandlung unterzogen, durch welche zumindest die in der Nähe der Oberfläche der Zähne gelegenen Bereiche des Zahnrads gehärtet werden. Um die bei der Wärmebehandlung auftretenden Veränderungen der Oberflächengeometrie auszugleichen und die Oberflächengeometrie der Zähne mit größerer Präzision zu fertigen, erfolgt die Hartfeinbearbeitung auf der Verzahnungsschleifmaschine. Dabei wird eine Schleifscheibe und/oder eine Schleifschnecke eingesetzt, mit welcher das Werkstück bearbeitet wird und welche diesem seine endgültige Geometrie verleiht.

Um die Schleifscheiben oder Schleifschnecken an die gewünschte Geometrie des Zahnrades anzupassen und/oder den Verschleiß einer Schleifscheibe und/oder Schleifschnecke auszugleichen, müssen die Schleifscheibe oder Schleifschnecke zur Einstellung auf eine neue Geometrie des Werkstücks in regelmäßigen Abständen während des Betriebs abgerichtet werden. Das Abrichten bzw. Profilieren einer Schleifscheibe und/oder Schleifschnecke umfasst dabei das eigentliche Profilieren, d. h. das Generieren der erforderlichen Geometrie der Schleifscheibe und/oder Schleifschnecke (Rundlauf, Zylindrizität, Profil), und das Schärfen, d. h. das Erzeugen einer schnittfreudigen Schleifoberfläche (Mikrogeometrie). In der Praxis wird aber häufig der Begriff Abrichten für das Erzeugen einer Geometrie und das Wiederherstellen einer schnittfreudigen Schleifoberfläche verwendet.

Für das Profilieren von Schleifscheiben und Schleifschnecken finden dabei je nach den erforderlichen Randbedingungen wie Abrichteinheit, Werkzeugart (Schnecke, Scheibe) oder geforderten Profilkorrekturen unterschiedliche Profilierwerkzeuge ihren Einsatz. Unterschieden wird dabei ebenfalls ob das gesamte Profil (ProfilAbrichten) oder nur Teilbereiche (Form-Abrichten) davon abgerichtet werden.

Beim Formabrichten wird die Abrichtscheibe entlang der Oberfläche des Werkzeuges bahngesteuert bewegt und richtet dabei das Schleifwerkzeug ab. Zwischen dem Abrichtwerkzeug und dem Schleifwerkzeug besteht ein begrenzter Kontakt. Beim Abrichten von Schleifschnecken ist daher eine Vielzahl von Abrichthüben notwendig, zwischen denen das Abrichtwerkzeug um einen bestimmten Betrag zugestellt wird, damit die gesamt Oberfläche des Schleifwerkzeuges abgerichtet wird. Dadurch ist der Abrichtvorgang sehr flexibel hinsichtlich Modifikationen, benötigt aber eine recht lange Zeit, da gleichzeitig immer nur kleine Bereiche des Werkzeuges abgerichtet werden.

Beim Profilabrichten geht der Abrichtvorgang deutlich schneller da immer das gesamte Profil abgerichtet wird. Es besteht eine Linienkontakt über der gesamten Profilhöhe des Schleifwerkzeuges. Damit sind Änderungen am Profil nur über eine Änderung am Abrichtwerkzeug möglich. Die Profilierzeit ist dabei sehr gering, da mit einem Abrichthub des Schleifwerkzeuges eine oder beide Flanken eines Schneckenganges fertig abgerichtet sind, je nachdem ob ein- oder beidflankig abgerichtet wird. Bei Bedarf können die Profilflanken voneinander unterschiedlich und über die Schneckenbreite veränderlich profiliert werden, um eine sogenannte dreidimensional modifizierte Schleifschnecke zu erzeugen. Teilweise werden beim Profilabrichten der Zahnkopf und die Zahnflanken auch separat abgerichtet. Hierzu gibt es dann spezielle Flanken- und Kopfabrichtscheiben.

Wenn nun die Prozesse Kopf- und Profilabrichten unterschiedlich häufig durchgeführt werden sollen oder auch wenn mehrere verschiedene Verzahnungen mit unterschiedlichen Profilen mit einem Schleifwerkzeug in einem Arbeitsprozess bearbeitet werden sollen, müssen mehrere Abrichtwerkzeuge gleichzeitig in der Maschine vorhanden sein. Diese müssen aber so montiert sein, das sie sich nicht gegenseitig beeinflussen. Dies muss auch dann gewährleistet sein, wenn das Abrichtwerkzeug unterschiedlich eingeschwenkt werden soll um den Eingriffswinkel der Verzahnung zu modifizieren.

Bekannte Vorrichtungen zum Abrichten von Schleifwerkzeugen haben immer entweder nur eine Werkzeugaufnahme oder aber die Werkzeugaufnahmen sind in einer Achsflucht nahe beieinander und beeinflussen sich damit gegenseitig.

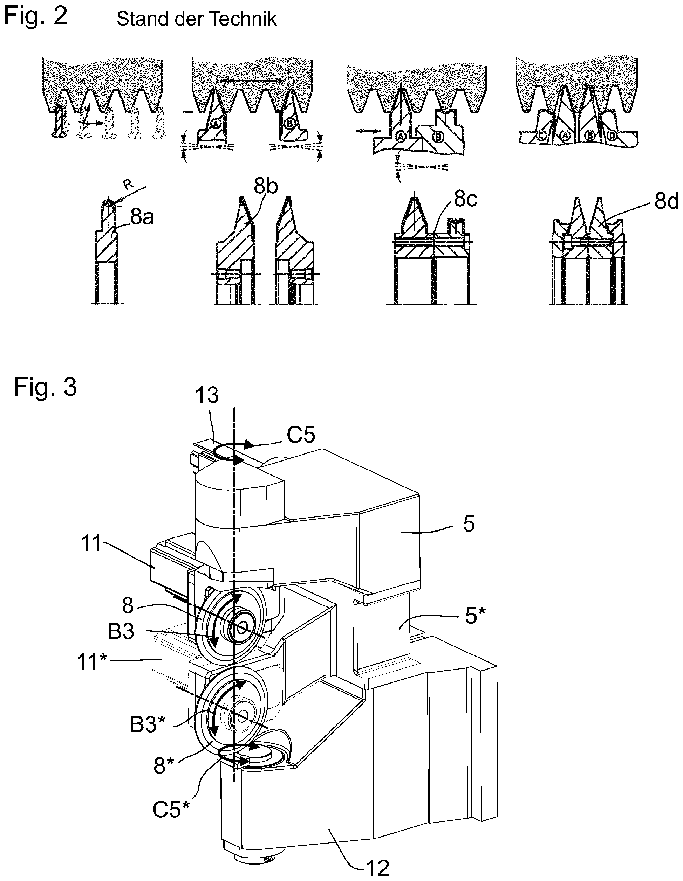

In der Firmenschrift Fässler DSA wird ein Diamantscheibenapparat als Doppelabrichter mit zwei Motoren, zum jeweils unabhängigen Antrieb zweier Abrichtdiamantscheiben offenbart. Die Werkzeugaufnahmen der beiden Abrichtmotoren weisen dabei mit Ihren Stirnseiten aufeinander zu. Die Werkzeugaufnahmen sind zur Aufnahme von Diamantscheiben vorgesehen mit denen die jeweils eine Flanke einer Schleifschnecke abgerichtet wird. Dargestellt wird diese Art der Abrichtscheiben in der Darstellung Fig. 2, Werkzeug 8b. In dieser Figur oben ist der Eingriffszustand der Abrichtscheiben mit der Schleifschnecke dargestellt. Teilweise gibt es noch Ausführungsformen, bei denen eine dieser Scheibe noch durch eine spezielle Abrichtrolle für den Zahnkopf der Schleifschnecke ergänzt wird, wie es auch in der Fig.2, Werkzeug 8c, rechte Scheibe dargestellt ist.

Die DE 10 2011120449 A1 betrifft ein Verfahren zum Schleifen eines eine Verzahnungsachse aufweisenden verzahnten Werkstückes in wenigstens zwei Arbeitsgängen, bei dem in einem ersten Arbeitsgang ein Schleifbereich eines durch das Schleifverfahren bestimmten, um eine Rotationsachse rotierenden und in Richtung des Achsabstandes zwischen Verzahnungsachse und Rotationsachse zugestellten Schleifwerkzeuges mit einer Zahnflanke des Werkstückes in Schleifeingriff gebracht wird, und die Zahnflanke in einem späteren zweiten Arbeitsgang mit einem Schleifbereich eines durch das Schleifverfahren bestimmten und in der Zustellrichtung des ersten Arbeitsgangs zugestellten Schleifwerkzeugs in Schleifeingriff gebracht wird, wobei der im ersten Arbeitsgang schleifende Schleifbereich durch ein erstes Abrichten mit einem Abrichtwerkzeug und der im zweiten Arbeitsgang schleifende Schleifbereich durch ein zweites Abrichten mit einem Abrichtwerkzeug abgerichtet werden, wobei man beim ersten Abrichten einen ersten Abrichtbereich und beim zweiten Abrichten einen von dem ersten Abrichtbereich räumlich getrennten zweiten Abrichtbereich in Abrichteingriff mit dem jeweiligen Schleifbereich bringt.

In der WO 94/19135 wird ein einteiliges, galvanisch belegtes Werkzeug mit zwei verschiedenen Bereichen offenbart. Diese zwei Bereiche sind mit Hartstoffen belegt, um unterschiedlichen Schleifaufgaben während des Hartfeinbearbeitungsprozesses zu übernehmen. Das Schleifwerkzeug besitzt eine konische Aufnahmehülse mit der es auf einen Werkzeuggrunddorn aufgezogen und gespannt wird. Ein Werkzeug in dieser Ausführungsform kann auch so ausgeführt werden, dass damit Werkstücke mit zwei unterschiedlichen Verzahnungen gemäß der Erfindung bearbeitet werden können. Durch die galvanische Belegung ist dieses Werkzeug aber nicht flexibel an die Bearbeitungsaufgabe anpassbar, wie das mit einem abrichtbaren Werkzeug der Fall wäre.

Die DE 10 2004 020 364 A1 beschreibt ein Werkzeug zum Wälzschleifen von Verzahnungen mit einem mehrteiligen Schleifwerkzeug mit abrichtbaren Schleifkörpern. Hier wird ein mehrteiliges Werkzeug beschrieben, bei dem verschiedenartige Schleifkörper auf einem gemeinsamen Grunddorn aufgespannt werden. Die verschiedenartigen Schleifkörper dienen bei dieser Anmeldung dazu jeweils den Schrupp- und den Schlichtprozess beim Schleifen einer Verzahnung mit einem dafür optimierten Schleifbelag durchzuführen und so einen möglich optimalen Bearbeitungsprozess zu erhalten. Die Anwendung auf verschiedene Verzahnungen wird nicht erwähnt.

In der EP0328482A1 werden verschiedene Kombiabrichtwerkzeuge zum Profilabrichten von Schleifschnecken gezeigt. Die Werkzeuge sind dabei so aufgebaut, dass Teile der Werkzeugoberfläche als Funktionsfläche zum Abrichten bestimmter Teilbereiche des Schleifwerkzeuges genutzt werden. Bei dem offenbarten 2-teiligen Werkzeug wird mit einer Abrichtscheibe die Flanken einer Schnecke abgerichtet, wo hingegen ein zweites Werkzeug zum Abrichten von Zahnkopf und Zahnfuß des Schleifwerkzeuges dient.

Der Abstand der zwei Werkzeuge muss exakt auf die Verzahnung eingestellt werden wenn beide Abrichtwerkzeug im Eingriff sind, da sonst andernfalls die Schleifschnecke beschädigt wird. Nur der Kopfabrichter kann über einen Kreuzschlitten senkrecht zur Werkzeugachse und in Achsrichtung des Abrichters bewegt werden. Damit kann der Kopf-und Fußabrichter nur zusätzlich zum Flankenabrichter eingesetzt werden. Ein Abrichter zweier verschiedener Verzahnungen ist mit dieser Anordnung nicht möglich.

Das Abrichtwerkzeug wie es die DE 196 24 842 A1 offenbart dient zur Bearbeitung von Teilbereichen eines Schleifwerkzeuges. Mit den Flanken des Abrichtwerkzeuges werden die Flanken des Schleifwerkzeuges in einem Linienkontakt abgerichtet. Der Kopf des Abrichtwerkzeuges dient zum Formabrichten von Teilbereichen eines Schleifwerkzeuges. Nachteil dieser Ausführung ist, dass mit diesem Werkzeug nur bedingt zwei unterschiedliche Verzahnungen abgerichtet werden können.

Moderne Getriebe enthalten neben den klassischen Zahnrädern mit Bohrung ("Bohrungs-Werkstücken") auch Eingangs-, Zwischen- und Abtriebswellen, die eine oder mehrere Verzahnung aufweisen, die direkt mit der Welle verbunden sind, bzw. aus einem Rohmaterial stammen. Die Verzahnungsgeometrie der Verzahnungen auf einem Bauteil können sich in diesem Zusammenhang hinsichtlich Modul, Kopf- / Fußrundungen, Profilballigkeiten, Zähnezahl und andere Faktoren unterscheiden, was dazu führt das die zwei verschiedenen Verzahnungen nicht mit ein und derselben Schleifschnecke oder Schleifscheibe bearbeitet werden können. Nach dem Stand der Technik werden solche Verzahnungen derzeit häufig mit galvanisch belegten Schleifwerkzeugen auf einer Maschine bearbeitet, oder aber die Werkstücke werden beim Einsatz von abrichtbaren Werkzeuge in zwei aufeinander folgenden Bearbeitungsoperationen bearbeitet.

Sollen diese Verzahnungen nun, aus wirtschaftlichen Gründen und weil Werkzeuge aus abrichtbaren Schneidstoffen einfacher umprofiliert werden können, auf einer Maschine in einer Bearbeitungsoperation fertig bearbeitet werden, so sind zu diesem Zweck dann mindestens zwei Abrichtwerkzeuge erforderlich um damit jeweils eine Schleifschnecke/-scheibe oder einen Schleifschneckenbereich abzurichten.

Nachteil aller bisher dargestellten Ausführungsformen für Abrichtscheiben ist die Tatsache, dass immer nur das Werkzeug zur Bearbeitung einer Verzahnung abgerichtet werden kann. Mit Ausnahme einer Form-Abrichtscheibe wie sie in der Fig.2, 8a dargestellt ist, sind die anderen Abrichtscheiben auf die Verzahnungsgeometrie der zu bearbeiteten Werkstücke abgestimmt. Mit einer Abrichtscheibe gemäß der Fig.2, Werkzeug 8a können nahezu beliebige Schleifscheiben oder Schleifschnecke bearbeitet werden sofern es die Geometrie der Abrichtscheibe zulässt. Nachteilig dabei ist aber die beanspruche Zeit für den Abrichtzyklus, da immer nur ein Teilbereich der Schleifwerkzeuges gleichzeitig bearbeitet wird. Das ist bei den Profilabrichtern der Fig.2, 8b bis 8c nicht oder nur bedingt der Fall.

Soll nun ein Schleifwerkzeug zur Bearbeitung eines Werkstückes mit mehreren Verzahnungen, die sich geometrisch (z.B. Modul, Kopf- oder Fußrücknahme, Profilballigkeiten, ggf. Zähnezahl etc.) deutlich unterscheiden, abgerichtet werden, so ist, wenn man nicht im Zeilenabrichtverfahren das Werkzeug bearbeiten möchte, die Verwendung von jeweils zwei unterschiedlichen Abrichtscheiben notwendig.

Der Aussendurchmesser dieser Abrichtwerkzeuge unterscheidet sich üblicherweise aber nur minimal. Sollen solche Abrichtscheiben eingesetzt werden, kann dies nicht mit einem Abrichtapparat nach dem Stand der Technik, mit zwei einander gegenüberliegenden Abrichtwerkzeugen erfolgen, da es sonst beim Abrichten der Schleifschnecken zu einer Kollision der Schleifschnecke mit dem jeweils gerade nicht genutzten Abrichtwerkzeug kommen würde. Von daher muss die die Abrichteinheit so konstruiert werden, dass die Abrichtscheiben nacheinander kollisionsfrei mit dem Schleifwerkzeug in Eingriff gebracht werden können.

Diese Aufgabe wird durch eine Vorrichtung, insbesondere eine Abrichteinrichtung und eine Werkzeuganordnung, mit den Merkmalen des Anspruchs 1 und ein Verfahren mit den Merkmalen des Anspruchs 4 gelöst. Weitere vorteilhafte Ausführungsformen der Vorrichtung und des Verfahrens sind Gegenstand der sich an die unabhängigen Ansprüche anschließenden abhängigen Ansprüche.

Kernpunkt der Erfindung ist eine Abrichteinheit die geeignet ist, mindestens zwei verschiedene Abrichtwerkzeuge aufzunehmen und diese unabhängig voneinander mit einem jeweils dazugehörenden Schleifwerkzeug oder -werkzeugbereich beim Abrichtprozess in den Eingriff zu bringen, ohne dass sich die Abrichtprozesse/Abrichtwerkzeuge dabei gegenseitig beeinflussen.

Eine Anordnung der Abrichtwerkzeuge wie sie im Fässler DSA Abrichter beschreiben ist, ist für diesen Anwendungsfall nicht geeignet. Wenn sich die Abrichtscheiben im Durchmesser nur minimal unterscheiden, würde es beim Abrichten von Schleifschnecken immer wieder zu Kollisionen zwischen dem gerade abgerichteten Schleifwerkzeug und dem anderen aktuell nicht genutzten Abrichter kommen. Auch bei der der Aufnahme von mehreren Abrichtwerkzeugen auf einem Aufnahmedorn würde es zu den oben beschriebenen Kollisionen kommen. Von daher müssen die Abrichtwerkzeugaufnahmen örtlich deutlich weiter voneinander entfernt sein.

Erfindungsgemäß sind die beiden Werkzeugaufnahmen für die Abrichtwerkzeuge übereinander angeordnet, so dass zunächst ein Schleifwerkzeug mit dem unteren Abrichtwerkzeug abgerichtet wird und anschließend ein zweites Schleifwerkzeug von dem oberen Abrichtwerkzeug.

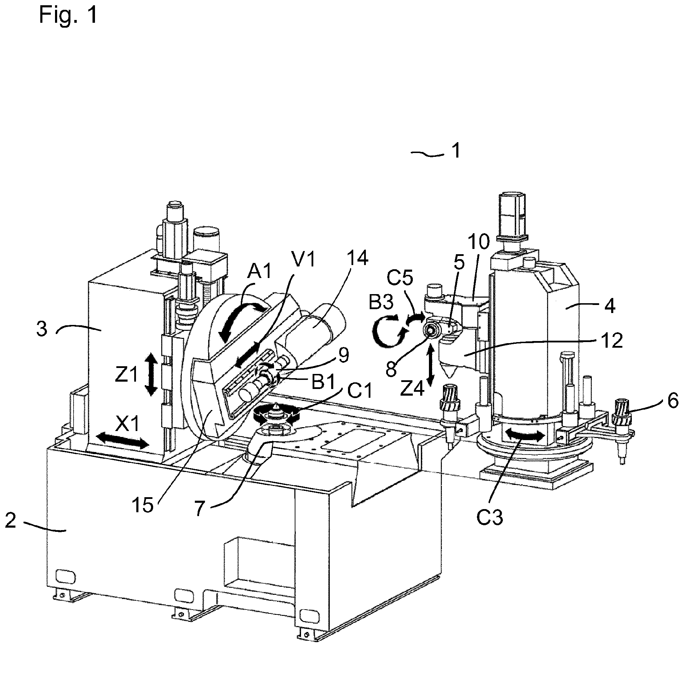

Unter Abrichtwerkzeug in diesem Zusammenhang wird auch ein Kombiabrichtwerkzeug zum gleichzeitigen Abrichten von Zahnkopf und Zahnflanken verstanden, wie es z.B. in der Fig. 2, 8c und 8d, dargestellt ist. Angeordnet sein könnte so eine Abrichteinheit auf dem Gegenhalter einer Schleifmaschine nach dem Stand der Technik wie sie in der Fig. 1 dargestellt ist. Es sind aber auch andere Anbauorte denkbar, die mit dem Bearbeitungskopf und/oder der Abrichteinrichtung anfahrbar sind und an denen die Schleifwerkzeuge mit den Abrichtwerkzeugen in Eingriff gebracht werden können.

Mindestens eine dieser Aufnahmen für das Abrichtwerkzeug ist um eine Achse, die unter einem Winkel von 10° bis 90° zur Abrichtwerkzeugachse steht, schwenkbar ausgeführt, so dass damit Änderungen am Eingriffswinkel einer Schleifschnecke ausführbar sind.

Die mindestens zwei Werkzeugaufnahmen sind unabhängig voneinander um die Werkzeugachse gesteuert antreibbar um das Abrichtwerkzeug in eine Drehbewegung zu versetzen.

Mit Hilfe dieser Erfindung sind die Schleifwerkzeuge deutlich flexibler abrichtbar. Des weiteren sind abrichtbare Werkzeuge zur Herstellung zweier verschiedener Verzahnungen auf einer Schleifmaschine ebenfalls schneller abrichtbar, da nicht auf das langsame Formabrichten / Zeilenabrichten zurückgegriffen werden muss.

Damit ist auch für diese Werkstücke eine wirtschaftliche und flexible Fertigung, unter Verwendung abrichtbarer Schleifwerkzeuge, möglich.

Alternativ kann die Abrichteinheit aber auch dann eingesetzt werden, wenn die Flanken des Schleifwerkzeuges und der Kopf mit unterschiedlichen Werkzeugen in verschiedenen Intervallen abgerichtet werden sollen. Dann ist ein Kombiwerkzeug wie es in Fig. 2, 8c, 8d dargestellt ist nicht mehr möglich. Dann müssen das Abrichtwerkzeug für die Werkzeugflanken und der Kopfabrichter separat ausgeführt sein, so dass diese Werkzeuge auch separate eingesetzt werden können.

Häufig werden bei der Korrektur eines Schleifwerkzeuges nur kleine Bereiche wie Kopfrücknahmen, Fußrücknahmen, Änderungen an der Fußausrundung oder am Profilwinkel gegenüber dem Standardprofil modifiziert. In dieser Ausführungsform kann ein Formabrichter mit einem Profilabrichter kombiniert werden. So kann bei dieser Werkzeugkombination dann prozesszeitoptimiert das gesamte Profil des Werkzeugs zunächst mit dem Profilabrichter abgerichtet werden und anschließend können dann mit dem Formabrichter kleine Profilbereiche, wie z.B. der Zahnfuß oder der Zahnkopf, noch mit dem Formabrichtverfahren zeilenweise modifiziert werden. Durch diese Kombination ist ein sehr flexibles Abrichten mit einer kurzen Abrichtzeit realisierbar.

Ebenfalls wäre mit dieser Abrichteinheit ein Kombiwerkzeug, bestehend aus mindestens einer Schleifschnecke und mindestens einer Schleifscheibe bzw. einem Schleifscheibensatzwerkzeug abrichtbar, denn häufig wird die Schleifscheibe formabgerichtet und für die Schleifschnecke kommt ein Profilabrichter zum Einsatz. Durch die voneinander unabhängigen Werkzeugaufnahmen können diese Kombi-schleifwerkzeuge ebenfalls schnell und flexibel abgerichtet werden.

Diese Kombination eröffnet dann auch weitere neue Möglichkeiten wie eine Kombination aus Verzahnungsbearbeitung mit einer Aussenrundschleifoperation oder auch eine Bearbeitungskombination aus Außen- und Innenverzahnungen, wenn der Bearbeitungskopf diese Möglichkeit bietet.

Zu dieser Abrichteinheit gehört weiterhin ein abrichtbares Schleifwerkzeug bestehend aus einer oder zwei Schleifschnecken, eine Kombination aus einer Schleifschnecke und einer Schleifscheibe oder aus zwei Schleifscheiben oder Schleifscheibensatzwerkzeugen. Je nach Einsatzfall kann dabei die jeweils optimal passende Kombination für den jeweiligen Bearbeitungsfall ausgewählt werden.

Die vorliegende Erfindung umfasst weiterhin eine Steuerungssoftware für eine Verzahnungsschleifmaschine, insbesondere eine in einem Datenspeicher oder auf einem Datenträger gespeicherte Steuerungssoftware mit Programmcode zur Durchführung eines Verfahrens, wie es oben beschrieben wurde. Hierdurch ergeben sich wiederum die erfindungsgemäßen Vorteile. Die Steuerungssoftware weist dabei vorteilhafterweise die entsprechenden Betriebsmodi bzw. Bedienerführungen auf.

Weitere Merkmale, Einzelheiten und Vorteile der Erfindung werden anhand von schematisch in der Zeichnung dargestellten Ausführungsbeispielen beschrieben. Hierbei zeigt:
- Fig. 1:: Verzahnungsschleifmaschine nach dem Stand der Technik
- Fig. 2:: Abrichtwerkzeuge nach dem Stand der Technik
- Fig. 3:: Doppelabrichter (Vorrichtung) gemäß der Erfindung
- Fig. 4:: Beispielhafte Werkstücke zur Nutzung des Verfahrens gemäß der Erfindung
- Fig. 5a:: Beispielhaftes Kombi-Schleifwerkzeuge Schnecke/Scheibe gemäß der Erfindung
- Fig. 5b:: Beispielhaftes Schleifwerkzeuge Schnecke/Schnecke gemäß der Erfindung

Figur 1 zeigt eine Verzahnungsschleifmaschine 1 nach dem Stand der Technik auf der beispielsweise eine Abrichtvorrichtung gemäß der Erfindung eingesetzt werden kann. Auf einem Maschinenbett 2 ist ein Maschinentisch 7 montiert der zur Aufnahme von Werkstücken 6 über eine Spannvorrichtung (nicht dargestellt) vorgesehen ist. Der Maschinentisch 7 ist dabei um die Achse C1 drehbar, welche vorteilhafterweise senkrecht ausgerichtet ist. Alternativ können aber auch horizontal ausgerichtete Maschinentische zum Einsatz kommen. Die Verzahnungsschleifmaschine weist weiterhin einen Maschinenständer 3 und einen Bearbeitungskopf 15 mit einer Arbeitsspindel 14 zum Einspannen einer Werkzeugaufnahme 9 auf. Dem Maschinenständer 3 gegenüberliegend ist ein Gegenständer 4 auf dem Maschinenbett 2 montiert. An dem Gegenständer 3 befindet sind ein Ladesystem mit einer Schwenkachse C3 welches die Werkstück 6 von einer externen Automation (nicht dargestellt) auf den Maschinentisch 7 bzw. in die auf dem Maschinentisch montierte Spannvorrichtung befördert. Am Gegenständer ist ein Gegenhalterarm 12 über eine Z4- Achse vertikal und parallel zur C1-Achse bewegbar. Auf dem Gegenhalterarm ist eine Abrichteinheit 10 befestigt. Das Abrichtwerkzeug 8 kann um eine Drehachse B3 und um eine Schwenkachse C5 bewegt werden.

Zur Hartfeinbearbeitung eines Werkstückes wird der Bearbeitungskopf 15 mit dem Werkzeug über die X1-Achse auf das Werkstück zu bewegt. Während der Werkstückbearbeitung drehen sich die C1- und B1-Achse synchronisiert d.h. wälzgekoppelt miteinander, während sich der Bearbeitungskopf in Z1-Richtung und ggf. in die X1, V1-Richtung bewegt. Die Bearbeitung des Werkstücks mit der Schleifscheibe oder Schleifschnecke erfolgt dabei üblicherweise durch Wälzschleifen oder Profilschleifen oder einer Kombination daraus.

Beim Abrichtprozess wird der Bearbeitungskopf 15 in dieser Ausführungsform über die X1-Achse und Z1-Achse an das Abrichtwerkzeug 8 heranbewegt und dort mit dem Abrichtwerkzeug 8 in Eingriff gebracht. Je nach der Art des Abrichtprogrammes und des Bearbeitungswerkzeuges wird der Bearbeitungskopf 15 mit dem Bearbeitungswerkzeug über die X1-, Z1-, V1- und A1 -Achse relativ zum Abrichtwerkzeug 8 bewegt, während sich das Bearbeitungswerkzeug um die B1-Achse dreht. Das Abrichtwerkzeug 8 selbst dreht sich dabei um seine B3-Achse wird bedarfsweise je nach dem gewählten Abrichtprogramm um die C5-Achse geschwenkt.

Die Figur 2 zeigt exemplarisch verschiedene Typen von Abricht- und Profilierwerkzeugen 8a bis 8d zum Form- und Profilabrichten von Schleifwerkzeugen, nach dem Stand der Technik. Ein Formabrichter 8a wird üblicherweise zum Abrichten von Schleifscheiben oder Schleifschnecken verwendet in dem die Abrichtscheibe mit ihrem Radius R entlang der Außenkontur der Schleifscheibe oder Schleifschnecke geführt wird, während sich die beiden Werkzeuge drehen. Dies wird häufig auch als Zeilenabrichten bezeichnet. Bei den anderen gezeigten Abrichter wird das Werkzeug bei einem Abrichtvorgang über seiner gesamte Profilhöhe abgerichtet, wobei dies ein- (Fig. 8b, 8c) oder beidflankig (Fig. 8d) erfolgen kann. Die erfindungsgemäße Abrichteinheit ist vorwiegend zur Anwendung von Abrichtern gemäß der Fig. 8c und 8d vorgesehen, da mit einer Abrichtscheibe, beide Zahnflanken eines Schleifwerkzeuges abgerichtet werden.

Figur 3 zeigt einen erfindungsgemäßen Abrichter 5,5* hier beispielsweise zur Anordnung auf dem Gegenhalterarm 12 am Gegenständer 4 einer Verzahnmaschine. Die beiden Abrichteinheiten 5, 5* sind übereinander angeordnet. Angetrieben werden die Abrichtwerkzeuge 8,8* mit den zwei Motoren 11, 11* die das Werkzeug um die B3-, B3*- Achse drehen. Über zwei weitere Motoren 13 (nur einer dargestellt) können die Abrichtwerkzeuge um die C5, C5* Achse gedreht werden.

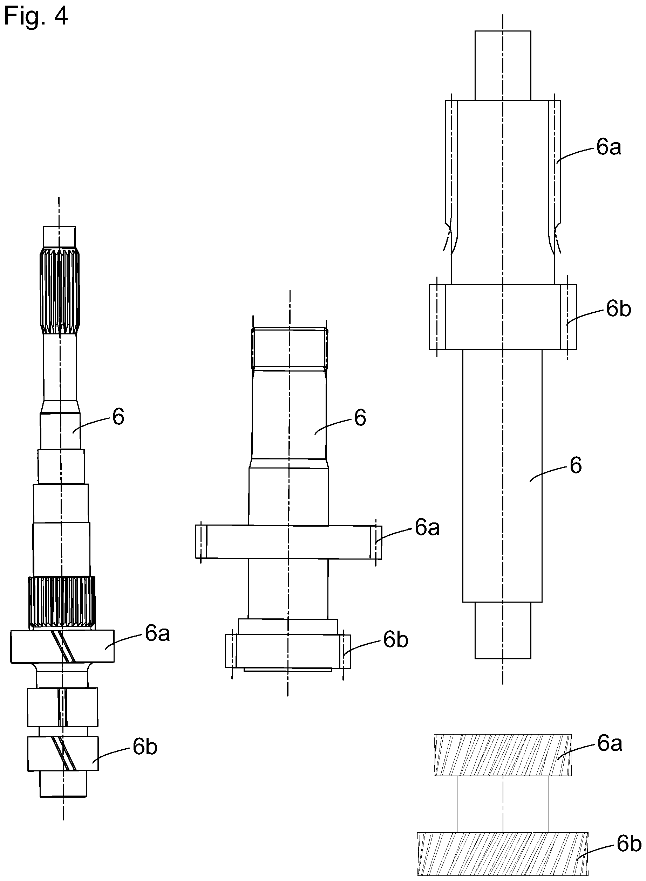

Die Figur 4 zeigt mögliche Ausgestaltungsformen von Werkstücken die mindestens zwei verschiedene Verzahnungen mit unterschiedlichen Verzahnungsgeometrien 6a, 6b aufweisen. Unterscheiden können sich diese Geometrien in Abmessungen wie Modul, Fuß- und Kopfrundungen, Profilballigkeiten, ggf. unterschiedlichen Zähnezahlen und anderen Verzahnungsmodifikationen, die verhindern, dass beide Verzahnungen mit einem Schleifwerkzeug bearbeitet werden können und so die Verwendung von mindestens zwei Werkzeugen nach sich ziehen.

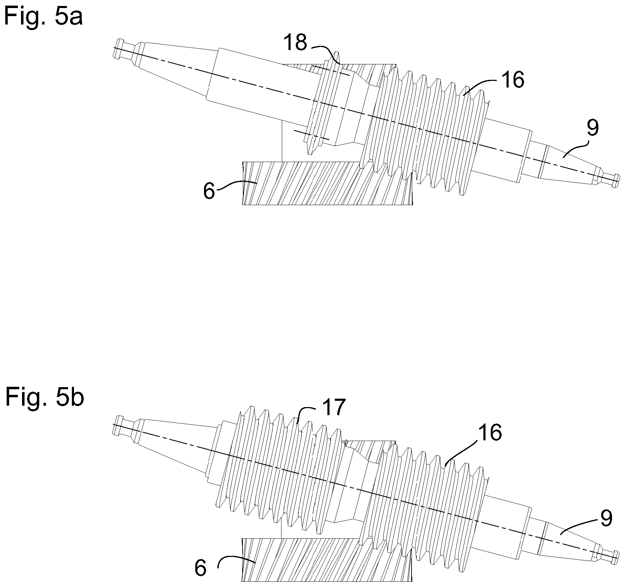

Die Figuren 5a und 5b zeigen exemplarisch einen möglichen Aufbau eines Schleifwerkzeuges 9 wie es gemäß der Erfindung genutzt werden kann. Dabei zeigt die Fig. 5a ein Kombinationswerkzeug zum Wälz- und Profilschleifen. Je nach Qualitätsanforderung, Zähnezahl, Verzahnungsbreite und weiteren möglichen Faktoren ist bei dieser Werkzeuganordnung der Anwender in der Lage, die für die Prozessauslegung optimalen Werkzeugeigenschaften einer Schleifschnecke 16 oder einer Schleifscheibe 18 in den Einsatz zu bringen. Selbstverständlich können auch mehrere Schleifschnecken 16, 17 und/oder Schleifscheiben 18 miteinander kombiniert werden. In der Fig. 5b ist ein reines Wälzschleifwerkzeug zur Bearbeitung von mindestens zwei Verzahnungen mit unterschiedlicher Verzahnungsgeometrie dargestellt. Nicht dargestellt ist ein Werkzeug bei dem ausschließlich mehrere Schleifscheiben oder Schleifscheibensätze montiert sind. Allen gemeinsam ist, das verschiedene Schleifwerkzeuge zur Bearbeitung unterschiedlicher Verzahnungsgeometrien auf einer Werkzeugaufnahme oder einem Werkzeugdorn montiert sind.

## Patentansprüche

1. Vorrichtung zum Abrichten von Wälz- oder Profilschleifwerkzeugen, mit einer Abrichteinheit mit mindestens zwei Werkzeugaufnahmen zur Aufnahme von mindestens zwei scheibenförmigen Abrichtwerkzeugen (8, 8*), wobei die Werkzeugaufnahmen so angeordnet sind, dass die Abrichtwerkzeuge einzeln mit dem Schleifwerkzeug in Eingriff gebracht werden können, ohne sich gegenseitig zu beeinflussen,
wobei die mindestens zwei Werkzeugaufnahmen unabhängig voneinander antreibbar sind und mindestens eine der zwei Werkzeugaufnahmen eine angetriebene Schwenkachse (C5, C5*) aufweist, mit der das Werkzeug um eine Achse, die unter einem Winkel von 10° bis 90° zur Werkzeugachse (B3, B3*) steht, schwenkbar ist, so dass damit Änderungen am Eingriffswinkel des als Schleifschnecke ausgebildeten Schleifwerkzeuges ausführbar sind,
**dadurch gekennzeichnet,**
**dass** die beiden Werkzeugaufnahmen für die Abrichtwerkzeuge übereinander angeordnet sind, vorzugsweise mit parallel verlaufenden Drehachsen (B3, B3*).

2. Vorrichtung nach Anspruch 1, **dadurch gekennzeichnet, dass** auf den mindestens zwei angetriebenen Werkzeugaufnahmen Abricht- und/oder Profilierwerkzeuge (8, 8*) mit unterschiedlicher Verzahnungsgeometrie aufgenommen sind.

3. Vorrichtung nach einem der vorhergehenden Ansprüche, **dadurch gekennzeichnet, dass** auf den mindestens zwei angetriebenen Werkzeugaufnahmen Abricht- und/oder Profilierwerkzeuge (8, 8*) mit unterschiedlichem Durchmessern aufgenommen sind.

4. Verfahren zum Abrichten eines Schleifwerkzeuges mit einer Vorrichtung gemäß einem der vorhergehenden Ansprüche, **dadurch gekennzeichnet, dass** mindestens zwei verschiedene Abrichtwerkzeuge (8, 8*) zum Abrichten und/oder Profilieren des Schleifwerkzeuges eingesetzt werden.

5. Verfahren nach Anspruch 4, **dadurch gekennzeichnet, dass** das Schleifwerkzeug mit den mindestens zwei verschiedenen Abrichtwerkzeugen (8, 8*) bearbeitet wird, um Werkzeugbereiche und/oder Profilbereiche des Schleifwerkzeuges mit einer definierten Abrichtgeometrie zu versehen.

6. Verfahren nach Anspruch 4 oder 5, **dadurch gekennzeichnet, dass** das Schleifwerkzeug mit den mindestens zwei verschiedenen Abrichtwerkzeugen (8, 8*) derart bearbeitet wird, um mindestens zwei Bereiche des Schleifwerkzeuges zu Bearbeitung von Verzahnungen mit unterschiedlicher Verzahnungsgeometrie zu versehen.

7. Verfahren nach einem der Ansprüche 4 bis 6, **dadurch gekennzeichnet, dass** das Schleifwerkzeug mindestens zwei Schleifschnecken, zwei Schleifscheiben oder zwei Schleifscheibensätze auf einem gemeinsamen Werkzeugträger umfasst.

8. Verfahren nach einem der vorhergehenden Ansprüche 4 bis 6, **dadurch gekennzeichnet, dass** das Schleifwerkzeug mindestens eine Schleifscheibe oder mindestens einen Schleifscheibensatz und mindestens eine Schleifschnecke umfasst.

9. Verzahnmaschine mit einer Vorrichtung nach einem der Ansprüche 1 bis 3 und insbesondere zur Durchführung des Verfahrens nach einem der Ansprüche 4 bis 8.

10. Steuerungsprogramm zur automatisierten Durchführung des Verfahrens nach einem der Ansprüche 4 bis 8 auf einer Verzahnmaschine nach Anspruch 9.

## Claims

1. An apparatus for dressing generating grinding tools or profile grinding tools comprising a dressing unit having at least two tool receivers for receiving at least two disk-shaped dressing tools (8, 8*), wherein the tool receivers are arranged such that the dressing tools can be individually brought into engagement with the grinding tool without mutually influencing one another,
wherein the at least two tool receivers can be driven independently of one another and at least one of the two tool receivers has a driven pivot axle (C5, C5*) by which the tool is pivotable about an axis which is at an angle of 10° to 90° toward the tool axis (B3, B3*) so that changes to the angle of engagement of the grinding tool configured as a worm grinding wheel can be made thereby,
**characterized in that**
the two tool receivers for the dressing tools are arranged above one another, preferably with axes of rotation (B3, B3*) extending in parallel.

2. An apparatus in accordance with claim 1, **characterized in that** dressing tools and/or profiling tools (8, 8*) having a different gear tooth geometry are received on the at least two driven tool receivers.

3. An apparatus in accordance with one of the preceding claims, **characterized in that** dressing tools and/or profiling tools (8, 8*) having different diameters are received on the at least two driven tool receivers.

4. A method for dressing a grinding tool having an apparatus in accordance with one of the preceding claims, **characterized in that** at least two different dressing tools (8, 8*) are used for dressing and/or profiling the grinding tool.

5. A method in accordance with claim 4, **characterized in that** the grinding tool is machined by the at least two different dressing tools (8, 8*) to provide tool regions and/or profile regions of the grinding tool with a defined dressing geometry.

6. A method in accordance with claim 4 or claim 5, **characterized in that** the grinding tool is machined in such a manner by the at least two different dressing tools (8, 8*) to provide at least two regions of the grinding tool for machining toothed arrangements with a different tooth geometry.

7. A method in accordance with one of the claims 4 to 6, **characterized in that** the grinding tool comprises at least two worm grinding wheels, two grinding wheels or two grinding wheel sets on a common tool carrier.

8. A method in accordance with one of the claims 4 to 6, **characterized in that** the grinding tool comprises at least one grinding wheel or at least one grinding wheel set and at least one worm grinding wheel.

9. A gear grinding machine having an apparatus in accordance with one of the claims 1 to 3 and in particular for carrying out the method in accordance with one of the claims 4 to 8.

10. A control program for the automated carrying out of the method in accordance with one of the claims 4 to 8 on a gear grinding machine in accordance with claim 9.

## Revendications

1. Dispositif destiné au dressage d'outils de rectification par génération ou de rectification de profil, comprenant une unité de dressage dotée d'au moins deux logements d'outil pour recevoir au moins deux outils de dressage (8, 8*) en forme de disque, les logements d'outil étant disposés de telle sorte que les outils de dressage peuvent être mis en prise individuellement avec l'outil de rectification sans exercer d'influence mutuelle,
les au moins deux logements d'outil pouvant être entraînés indépendamment l'un de l'autre et au moins un des deux logements d'outil comportant un axe de pivotement (C5, C5*) entraîné, avec lequel l'outil peut être pivoté sur un axe qui forme un angle de 10° à 90° par rapport à l'axe d'outil (B3, B3*), de telle sorte que des modifications de l'angle de pression de l'outil de rectification réalisé sous la forme d'une meule-mère peuvent ainsi être mises en oeuvre,
**caractérisé en ce que**
les deux logements d'outil pour les outils de dressage sont disposés l'un au-dessus de l'autre, de préférence avec des axes de rotation (B3, B3*) parallèles.

2. Dispositif selon la revendication 1, **caractérisé en ce que** des outils de dressage et/ou de profilage (8, 8*) avec une géométrie de denture différente sont reçus sur les au moins deux logements d'outil entraînés.

3. Dispositif selon l'une des revendications précédentes, **caractérisé en ce que** des outils de dressage et/ou de profilage (8, 8*) avec des diamètres différents sont reçus sur les au moins deux logements d'outil entraînés.

4. Procédé de dressage d'un outil de rectification au moyen d'un dispositif selon l'une des revendications précédentes, **caractérisé en ce qu'**au moins deux outils de dressage (8, 8*) différents sont utilisés pour le dressage et/ou le profilage de l'outil de rectification.

5. Procédé selon la revendication 4, **caractérisé en ce que** l'outil de rectification est usiné avec les au moins deux outils de dressage (8, 8*) différents, pour donner une géométrie de dressage définie à des zones d'outil et/ou des zones de profil de l'outil de rectification.

6. Procédé selon la revendication 4 ou 5, **caractérisé en ce que** l'outil de rectification est usiné avec les au moins deux outils de dressage (8, 8*) différents de manière à donner une géométrie de denture différente à au moins deux zones de l'outil de rectification pour l'usinage de dentures.

7. Procédé selon l'une des revendications 4 à 6, **caractérisé en ce que** l'outil de rectification comprend au moins deux meules-mères, deux meules ou deux jeux de meules sur un porte-outil commun.

8. Procédé selon l'une des revendications précédentes 4 à 6, **caractérisé en ce que** l'outil de rectification comprend au moins une meule ou au moins un jeu de meules et au moins une meule-mère.

9. Machine à tailler les engrenages comprenant un dispositif selon l'une des revendications 1 à 3 et en particulier destinée à exécuter le procédé selon l'une des revendications 4 à 8.

10. Programme de commande pour l'exécution automatisée du procédé selon l'une des revendications 4 à 8 sur une machine à tailler les engrenages selon la revendication 9.
